Europäisches Patentamt

European Patent Office

Office européen des brevets

(11) Veröffentlichungsnummer: **0 498 900 A1**

# EUROPÄISCHE PATENTANMELDUNG

(21) Anmeldenummer: **91101812.5**

(51) Int. Cl.5: **B23Q 15/02**

(22) Anmeldetag: **09.02.91**

(43) Veröffentlichungstag der Anmeldung:
**19.08.92 Patentblatt 92/34**

(84) Benannte Vertragsstaaten:
**DE ES FR GB IT SE**

(71) Anmelder: **ABRAMATIC SYSTEME
INGENIERIE, (A.S.I.)
8, avenue du Parana, ZA de Courtaboeuf
F-91952 Les Ulis Cédex(FR)**

(72) Erfinder: **Bertrand, Didier
45 avenue du Louvre
F-78000 Versailles(FR)**

(74) Vertreter: **Jackisch, Walter, Dipl.-Ing. et al
Patentanwalt W. Jackisch & Partner
Menzelstrasse 40
W-7000 Stuttgart 1(DE)**

(54) Verfahren und Vorrichtung zur massgesteuerten Bearbeitung von Werkstücken.

(57) Die Erfindung betrifft ein Verfahren zur maßgesteuerten Bearbeitung von zylindrischen Außenflächen an Werkstücken auf Feinbearbeitungsmaschinen, wobei ein Schleifmittel gegen das drehende Werkstück gedrückt wird. Um in einer Bearbeitungsstation eine hochgenaue Feinbearbeitung der Außenfläche zu erzielen, ist vorgesehen, den Durchmesser des Werkstücks vor der Bearbeitung zu erfassen und über eine Steuereinrichtung die zum Erreichen des Fertigmaßes notwendige Spanabnahme zu berechnen. Während der Bearbeitung des Werkstücks wird die Spanabnahme permanent durch eine Meßvorrichtung abgegriffen, um bei Erreichen der errechneten Spanabnahme die Bearbeitung zu beenden.

Die Erfindung betrifft ein Verfahren zur maßgesteuerten Bearbeitung von zylindrischen Außenflächen von Werkstücken auf Feinbearbeitungsmaschinen nach dem Oberbegriff des Anspruches 1 sowie eine Vorrichtung zur Durchführung des Verfahrens nach dem Oberbegriff des Anspruches 5.

Die Feinbearbeitung von zylindrischen Tragflächen wie zum Beispiel bei Kugellagern, Lagern und Zapfen von Kurbelwellen, bei denen eine hohe Oberflächengüte gefordert ist, erfolgt durch Honsteine oder durch Schleifbänder, welche mittels Backen gegen die zu bearbeitende Werkstückoberfläche gedrückt werden. Das Werkstück ist dabei drehend angetrieben und führt vorteilhaft eine axiale hin und her gehende Oszillationsbewegung aus.

Es ist bekannt, eine derartige Bearbeitung zeitgesteuert auszuführen, wobei die Bearbeitungszeit abhängig ist vom Vormaß und vom Fertigmaß. Diesem Verfahren liegt die Erkenntnis zugrunde, daß ein bestimmtes Werkstückmaterial ein etwa konstantes Schneidverhalten aufweist. Da die beim Vormaß auftretenden Toleranzen und die in der Praxis beobachteten Schwankungen des Schneidvermögens das erzielbare Fertigmaß beeinflussen, sind mit diesem bekannten Verfahren sehr enge Maßtoleranzen nicht zu erzielen.

Der Erfindung liegt die Aufgabe zugrunde, ein Verfahren zur maßgesteuerten Bearbeitung von zylindrischen Außenflächen an Werkstücken auf Feinbearbeitungsmaschinen derart weiterzubilden, daß in einfacher Weise reproduzierbar sehr enge Fertigmaßtoleranzen sicher erzielt werden können sowie eine Vorrichtung zur Durchführung des Verfahrens anzugeben.

Die Aufgabe wird erfindungsgemäß durch die kennzeichnenden Merkmale des Anspruches 1 gelöst.

Unabhängig von schwankenden Vormaßen wird mit dem erfindungsgemäßen Verfahren nur die zur Erzielung des Fertigmaßes notwendige Spanabnahme abgenommen. Da der Ist-Durchmesser des Werkstücks in kurzen Abständen permanent überwacht wird, ist bei Erreichen des Fertigmaßes ein rasches Abschalten der Bearbeitungsstation gewährleistet, so daß hohe Maßtoleranzen erzielt sind.

Vorteilhaft wird der Durchmesser des Werkstückes jeweils in einer vorgegebenen Drehstellung des Werkstücks erfaßt, so daß bei einer Vorbearbeitung auftretende Formfehler keinen störenden Einfluß auf das Fertigmaß haben. Zweckmäßig ist vorgesehen, die am Werkstück angeordnete Meßvorrichtung immer dann auf die Steuereinheit durchzuschalten, wenn die vorgegebene Drehstellung des Werkstücks erreicht ist.

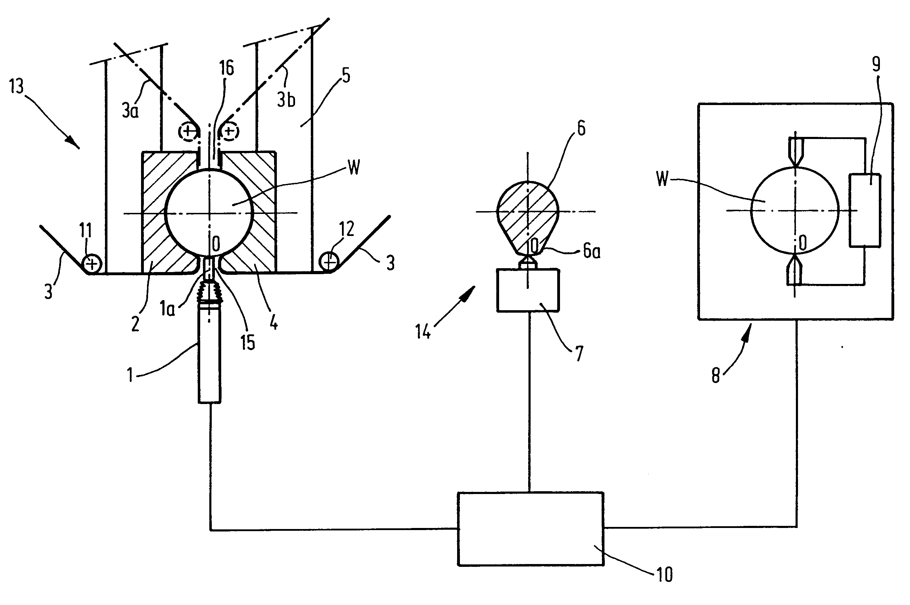

Eine vorteilhafte Vorrichtung zur Durchführung des Verfahrens ist in Anspruch 5 wiedergegeben. Weitere Merkmale der Erfindung ergeben sich aus den weiteren Ansprüchen, der Beschreibung und der Zeichnung, in der ein nachfolgend näher erläutertes Ausführungsbeispiel einer Vorrichtung schematisch dargestellt ist.

Die zur Durchführung des erfindungsgemäßen Verfahrens bestimmte Vorrichtung besteht aus einer Meßstation 8 für das zu bearbeitende Werkstück W, einer Bearbeitungsstation 13 für das Werkstück W sowie einem mit der Bearbeitungsstation 13 gekoppelten Impulsgeber 14.

Die Bearbeitungsstation 13 dient der Feinbearbeitung zylindrischer, gewölbter Außenflächen des Werkstücks W. Das Werkstück W liegt zwischen zwei formgerecht ausgebildeten, gehäusefesten Backen 2 und 4, welche in nicht näher dargestellter Weise über Träger 5 mit einem vorgebbaren Anpreßdruck kräftig gegen das Werkstück W gedrückt werden. Die Backen 2 und 4 liegen in ihrer Bearbeitungsstellung mit geringem Abstand voneinander; das Werkstück W wird von jeder Backe über etwa 160° umfaßt.

Die Backen 2 und 4 tragen ein Schleifmittel wie zum Beispiel entsprechend geformte Honsteine oder dienen - wie im Ausführungsbeispiel - als Abstützfläche für ein Schleifband 3, welches das Werkstück W umschlingt. Das Schleifband 3 wird dabei über eine Umlenkrolle 11 der durch die Backen 3 und 4 begrenzten Lücke 15 zugeführt und tritt zwischen dem Werkstück W und der Backe 2 ein. Die der Lücke 15 diametral gegenüberliegende andere Lücke 16 wird vom Schleifband 3 überbrückt, welches zwischen dem Werkstück W und der Backe 4 weitergeführt ist, um wieder an der Lücke 15 auszutreten und über die Umlenkrolle 12 abgeführt zu werden. Das Schleifband umschlingt das Werkstück W über etwa 360° seines Umfangs. Aufgrund der Führung des endlosen Schleifbandes 3 ist das Werkstück W über die Lücke 15 radial zugänglich, so daß in der Lücke 15 eine Meßvorrichtung angeordnet werden kann. Diese besteht im gezeigten Ausführungsbeispiel aus einem Meßdorn 1, dessen Taststift 1a an der zylindrischen Außenfläche des Werkstücks anliegt. Mittels des Meßdorns wird der aktuelle Durchmesser des Werkstücks während der Bearbeitung permanent erfaßt. Als Meßeinrichtung kann auch eine pneumatische oder elektronische Meßvorrichtung angeordnet sein.

Wie strichpunktiert angedeutet, können anstelle eines endlosen Schleifbandes 3 auch zwei endlose Schleifbänder 3a und 3b angeordnet werden, wobei das erste Schleifband 3a zwischen der Backe 2 und dem Werkstück W liegt, während das andere Schleifband 3b zwischen der Backe 4 und dem Werkstück W liegt. Bei dieser Ausführung ist das Werkstück sowohl über die Lücke 15 als auch über die Lücke 16 radial zugänglich, so daß zwei Meßvorrichtungen angeordnet werden können.

Das Werkstück W wird - nach Anlegen der Backen 2 und 4 - drehend angetrieben und vorzugsweise gleichzeitig kurzhubig axial hin und her bewegt. Vorzugsweise läuft während der Bearbeitung das endlose Schleifband 3 bzw. die Schleifbänder 3a und 3b um, so daß die ganze Oberfläche des Schleifbandes bei einer Bearbeitung zur Wirkung kommt.

Mit dem Drehantrieb des Werkstücks W ist synchron eine Nockenwelle 6 gekoppelt, deren Nocken 6a auf einen Fühler 7 wirkt. Je Umdrehung des Nockens 6a gibt der Fühler 7 in vorbestimmter Drehlage einen Impuls an eine Steuereinrichtung 10 ab. Da die Nockenwelle und das Werkstück W synchron drehen, tritt der Impuls auch immer in vorbestimmter Drehlage des Werkstücks W auf und markiert so eine vorbestimmte Drehstellung (Nullstellung des Werkstücks W).

Die Bearbeitungsstation 13, der Impulsgeber 14 und die Meßstation 8 sind an einer Steuereinrichtung 10 angeschlossen, die elektronisch arbeitet und unter anderem einen Rechner aufweist.

Zur Bearbeitung eines Werkstücks W wird dieses zunächst in die Meßstation 8 eingelegt, wo mittels einer Meßlehre 9 dessen Ausgangsdurchmesser erfaßt wird. Der Ausgangsdurchmesser wird von der Meßstation 8 der Steuereinrichtung 10 mitgeteilt, die anhand vorgegebener Daten die notwendige Spanabnahme zur Erzielung des gewünschten Fertigmaßes ermittelt. In der Steuereinrichtung 10 ist ferner ein Speicher vorhanden, um sicherzustellen, daß die ermittelte Spanabnahme erst dann zur Steuerung herangezogen wird, wenn das entsprechende Werkstück W in der Bearbeitungsstation 13 eingespannt ist.

Ist das vermessene Werkstück W in der Bearbeitungsstation 13 zwischen den Backen 2 und 4 aufgenommen, wird die Drehbewegung des Werkstücks W gestartet. Sobald der durch die Nockenlage des Nockens 6a vorbestimmte Nullpunkt erreicht ist, gibt der Fühler 7 ein Steuersignal ab, worauf das Ausgangssignal des Meßdorns 1 zu Null gesetzt wird. Nun wird mit der Bearbeitung der Außenfläche des Werkstücks W begonnen, wozu die Backen 2 und 4 das Schleifmittel - im Ausführungsbeispiel das Schleifband 3 - kräftig gegen das Werkstück drücken. Nach jeder Drehung des Werkstücks W gibt der Impulsgeber ein Steuersignal ab, worauf der anliegende Meßwert am Meßdorn 1 in die Steuereinrichtung 10 eingelesen und mit der errechneten notwendigen Spanabnahme verglichen wird. Dieser Vergleich erfolgt somit nach jeder Umdrehung des Werkstücks W; es kann auch vorteilhaft sein, durch entsprechende Untersetzung zwischen dem Drehantrieb des Werkstücks und der Nockenwelle einen Meßwert nur jede zweite, dritte oder vierte Umdrehung abzunehmen oder pro Umdrehung des Werkstücks W in mehreren vorbestimmten Drehlagen den Außendurchmesser des Werkstücks durch die Steuereinrichtung 10 zu erfassen.

Erreicht das Ausgangssignal des Meßdorns 1 den Wert der durch die Steuereinrichtung 10 berechneten Spanabnahme, schaltet die Steuereinrichtung die Bearbeitungsstation 13 ab - die hochgenaue Feinbearbeitung des Werkstücks W ist hochgenau abgeschlossen.

**Patentansprüche**

1. Verfahren zur maßgesteuerten Bearbeitung von zylindrischen Außenflächen an Werkstücken auf Feinbearbeitungsmaschinen, wobei ein Schleifmittel gegen das drehende Werkstück (W) gedrückt wird,
dadurch gekennzeichnet, daß der Außendurchmesser des Werkstücks (W) vor der Bearbeitung in einer Meßstation (8) gemessen wird, daß der gemessene Durchmesser einer Steuereinrichtung (10) mitgeteilt wird, die anhand vorgegebener Maße die zum Erreichen des Fertigmaßes notwendige Spanabnahme berechnet, daß während der Bearbeitung des Werkstücks dessen Spanabnahme durch eine am Werkstück (W) angeordnete Meßvorrichtung (1) ermittelt wird, und daß bei Erreichen der berechneten Spanabnahme die Bearbeitung beendet wird.

2. Verfahren nach Anspruch 1,
dadurch gekennzeichnet, daß der Durchmesser des Werkstücks (W) jeweils in einer vorgegebenen Drehstellung des Werkstucks (8) erfaßt wird.

3. Verfahren nach Anspruch 2,
dadurch gekennzeichnet, daß die Meßvorrichtung (1) ein dem jeweiligen Durchmesser des drehenden Werkstücks entsprechendes Ausgangssignal abgibt, welches jeweils bei Erreichen einer vorgegebenen Drehstellung des Werkstücks (W) an die Steuereinrichtung (10) durchgeschaltet wird.

4. Verfahren nach Anspruch 2 oder 3,
dadurch gekennzeichnet, daß synchron mit der Drehung des Werkstücks (W) eine Nockenwelle (6) gedreht wird, deren Nocken (6a) bei Erreichen der vorgegebenen Drehstellung des Werkstücks (W) einen Fühler (7) zum Auslösen eines Steuersignals betätigt, welches das Durchschalten des Ausgangssignals der Meßvorrichtung (1) an die Steuereinrichtung (10) auslöst.

5. Vorrichtung zur Durchführung des Verfahrens nach Anspruch 1, mit einer Bearbeitungsstation (13), die zwei einander gegenüberliegende Backen (2, 4) zum Andrücken eines Schleifmittels an das drehende Werkstück (W) aufweist, gekennzeichnet durch eine Meßstation (8) zur Erfassung des Außendurchmessers des Werkstücks (W) vor der Bearbeitung und eine zwischen die Backen (2, 4) eingreifenden, zum Werkstück (W) ausgerichteten Meßvorrichtung (1), wobei die Bearbeitungsstation (13), die Meßstation (8) und die Meßvorrichtung (1) mit einer Steuereinrichtung (10) verbunden sind.

6.  Vorrichtung nach Anspruch 5,
    dadurch gekennzeichnet, daß mit dem Drehantrieb des Werkstücks (W) eine synchron mitdrehende Nockenwelle (6) gekoppelt ist, deren Nocken (6a) jeweils in einer vorgegebenen Drehstellung des Werkstücks (W) auf einen Fühler (7) zum Auslösen eines Steuersignals wirkt.

7.  Vorrichtung nach Anspruch 5 oder 6,
    dadurch gekennzeichnet, daß die Meßvorrichtung ein Meßdorn (1) ist, vorzugsweise mit einem am Werkstück anliegenden Taststift (1a).

8.  Vorrichtung nach einem der Ansprüche 5 bis 7,
    dadurch gekennzeichnet, daß das Schleifmittel ein vorzugsweise endloses Schleifband (3, 3a, 3b) ist.

9.  Vorrichtung nach Anspruch 8,
    dadurch gekennzeichnet, daß das Schleifband (3) das Werkstück (W) über einen Umfangswinkel von ca. 360° umschlingt.

10. Vorrichtung nach Anspruch 8,
    dadurch gekennzeichnet, daß dem Werkstück (W) zwei Schleifbänder (3a, 3b) zugeordnet sind, die an einander gegenüberliegenden Umfangsbereichen des Werkstücks (W) anliegen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4715147 (LAWRENCE I. MILLAY ET AL) <br> * Spalte 3, Zeile 31 - Spalte 4, Zeile 23 * <br> * Figur 1 * | 1 | B23Q15/02 |
| A | | 5, 7 | |
| | --- | | |
| Y | WERKSTATTSTECHNIK, ZEITSCHRIFT FUR INDUSTRIELLE FERTIGUNG. <br> vol. 74, no. 12, Dezember 1984, <br> WURZBURG, DEUTSCHLAND <br> Seiten 736 - 738; W. Bahmann: <br> "Festwertgeregeltes Wälzlagerrundschleifen" <br> * das ganze Dokument * | 1 | |
| A | | 5 | |
| | --- | | |
| A | EP-A-0276802 (FORTUNA-WERKE MASCHINENFABRIK) <br> * Spalte 5, Zeile 29 - Spalte 7, Zeile 4 * <br> * Figuren 1-5 * | 1-7 | |
| | --- | | |
| A | DE-U-8815174.3 (MASCHINENBAU GRIESHABER) <br> * Seite 7, Absatz 4 - Seite 8, letzter Absatz * <br> * Anspruch 1; Figur 1 * | 1, 5, 8 | |
| | --- | | **RECHERCHIERTE SACHGEBIETE (Int. Cl.5)** |
| A | DE-A-3447828 (BRUNNENKANT,WALTER) <br> * Seite 4, Zeile 1 - Seite 6, Zeile 6 * <br> * Seite 8, Zeile 1 - Seite 8, Zeile 9 * <br> * Figur 4 * | 1, 5, 8, 9 | B23Q <br> B24B |
| | --- | | |
| A | EP-A-0219301 (INDUSTRIAL METAL PRODUCTS) <br> * Zusammenfassung; Figur 4 * | 1, 5, 8, 10 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 31 JULI 1991 | NETTESHEIM J. |